# EUROPEAN PATENT SPECIFICATION

(11) **EP 1 552 969 B1**
(45) Date of publication and mention of the grant of the patent: **06.05.2009**
(21) Application number: 05100078.4
(22) Date of filing: 07.01.2005
(51) Int. Cl.: B60C 27/10, B60C 27/12

(54) **Quick-fit improved attachment device for an anti-skid system for vehicle wheels**
Schnellbefestigungsvorrichtung für Gleitschutzsysteme zum Montieren auf Fahrzeugräder
Dispositif de fixation rapide pour système anti-glissement à montage sur roues de véhicule

(30) Priority: 08.01.2004 IT MI20040006
(43) Date of publication of application: 13.07.2005
(73) Proprietor: MAGGI CATENE S.p.A., 23854 Olginate (LECCO) (IT)
(72) Inventor: Bouvier, Jean-Pierre, CH-1052 Le Mont sur Lausanne (CH); Maggi, Giuseppe, I-23900 Lecco (IT)
(74) Representative: Faggioni, Carlo Maria

(56) References cited:
- EP-A- 0 285 903
- EP-A- 0 496 702
- US-A1- 2003 041 940

## Description

### BACKGROUND ART

### Field of the invention

The present invention relates to an improved attachment device for an anti-skid system for vehicle wheels, in particular for an anti-skid system of the type comprising support spokes which are elastically attached to the rim of a wheel.

Some anti-skid systems of this type are known from EP 496.702 and CH 689.206.

Another particularly effective device is the one disclosed in the application PCT/IB03/02898 in the name of the same Applicant, hereby incorporated as reference.

A device corresponding with the preamble of claim 1 is known from US-A-2003 004 1940.

In these known devices, the system for fixing the support spokes to the wheel consists of a connection body which may be joined, through an attachment device, to a bush body clamped on a rim bolt.

This solution, although substantially simple and cost-effective, under some circumstances can appear to be not completely efficient and balanced. In any case, it has the great advantage of being adaptable to any wheel, since it is not affected by rim size or rim bolt arrangement.

It is an object of the present invention to provide an improved attachment system which is more effective and balanced in any condition, despite being configured so as to be adaptable to a plurality of different rim bolt arrangements.

### SUMMARY OF THE INVENTION

The aforementioned object is achieved, according to the invention, by an attachment device as described in its essential features in the attached claims.

In particular, the device of the invention is in the form of a rim attachment assembly having at least one bridge element that can be lengthened or shortened, engaged at the ends thereof with two or more opposite bolts of the rim. The bridge element is constrained by the bolts simply crosswise and, through a manoeuvring member, is extended or shortened to impart a compression or traction between the bolts which is sufficient to establish a tight lock also in an axial direction. Advantageously, the spoke structure of the anti-skid system is fixed in a central position of said bridge element.

### BRIEF DESCRIPTION OF THE DRAWINGS

Further features and advantages of the system according to the invention will in any case be more evident from the following detailed description of some preferred embodiments of the same, given by way of example and illustrated in the accompanying drawings, wherein:
fig. 1A is an elevation side view, partially sectioned, of a first preferred embodiment of the attachment assembly according to the invention;
fig. 1B is a plan view of the assembly of fig. 1A;
fig. 2 is a view similar to fig. 1A of a second embodiment;
fig. 3 is a view similar to fig. 1A of a third embodiment; and
fig. 4 is a view similar to fig. 1A of a fourth embodiment.

### DESCRIPTION OF SOME PREFERRED EMBODIMENTS

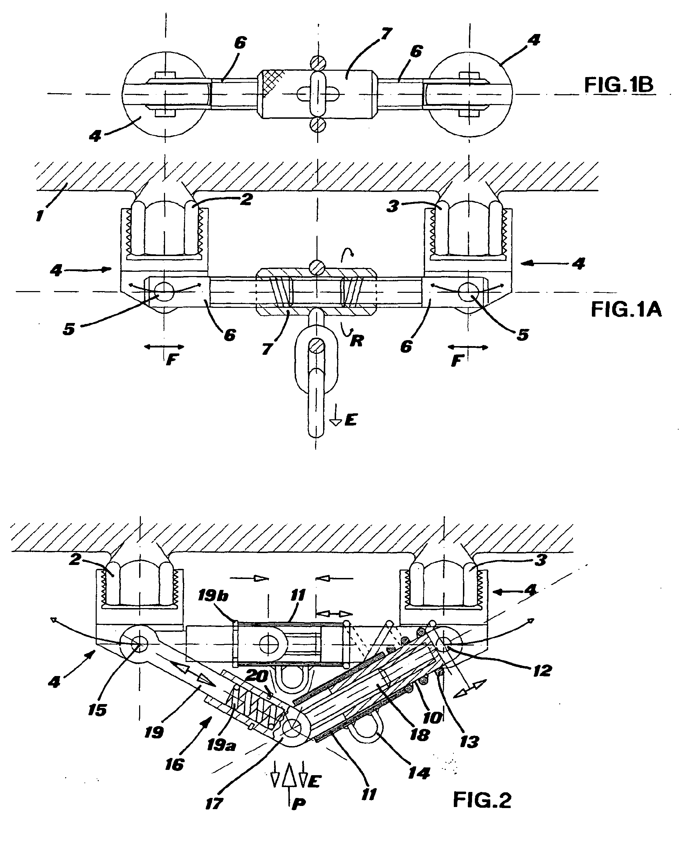

Fig. 1A shows a first preferred embodiment of an attachment assembly of the spoke anti-skid system (not shown) for attachment to a wheel rim 1.

The rim 1 has, in a known manner, a series of bolts fastening the wheel to the vehicle hub, in particular it is normally possible to identify at least two opposite ones thereof, referred to as 2 and 3.

On each of the bolts 2 and 3 of the opposite pair of bolts, a bush body 4 is engaged, which snugly fits the bolt itself. As will be seen in the following, it is not necessary per se for the bush bodies 4 to be of the type jaw-clamping the bolts; it is instead sufficient for them to have an inner coupling surface which guarantees sufficient friction with the bolt to avoid easy slip off. For example, as can be seen in the drawings, the inner surface of the bush bodies 4 has a varyingly rough surface or a surface provided with a layer of a high-friction deformable material, such as rubber.

According to a first embodiment, the head of each bush body 4 is equipped with a pin 5, or other similar element, whereto the end of a threaded stem 6 is hinged.

The two threaded stems 6 of the two opposite bush bodies 4 are mutually convergent and engage, with a screw/nut-thread coupling, with a manoeuvring bush 7 which is centrally located between the pair of bolts 2 and 3, hence substantially on the wheel rotation axis.

In particular, the threaded ends of the two stems 6, which are equipped with a reverse pitch, engage with the nut thread inside the bush 7, which is itself divided into two reverse-pitch half-portions.

Finally, attached to manoeuvring bush 7 is a chain element, or other suitable element, whereto the connection body of the spoke anti-skid system (not shown) is joined.

Rotation of the manoeuvring bush 7 (indicated by arrow R in fig. 1A) causes, if in one direction, the mutual coming together of the two stems 6 and hence of the pins 5 and, in the other direction, the mutual drawing apart of the two stems 6. For such purpose, the manoeuvring bush 7 preferably has a knurled outer surface which improves the grip by a hand's fingers.

Extension or shortening of the connection assembly of the two bush bodies 4 (hereinafter referred to as "bridge element" for simplicity's sake) imparts a compression or a traction to the head of the bush bodies 4, as indicated by arrows F in fig. 1A, which further strengthens and consolidates the coupling between the inner surface of each body 4 and the corresponding bolt. It is thereby possible to provisionally join the entire attachment assembly to the pair of opposite bolts 2 and 3, without the extraction traction E (normally few kilograms) imparted by the elasticity of the spoke anti-skid system, being able to cause the assembly to disengage from the wheel rim. In other words, the crosswise force imparted by the bridge element to the bush bodies 4 creates a friction force between the bodies 4 and the corresponding bolts, along the coupling axis thereof and proportional to the existing friction coefficient, which prevents the mutual slip off of the bodies 4 from the bolts.

From a practical point of view, the user has to initially rotate the manoeuvring bush 7 until the distance between the centres of the two pins 5 is substantially equivalent to the one between a pair of opposite rim bolts of his or her car. After that, the two bush bodies 4 can be fitted onto respective bolts, by imparting a simple pressure. Once the two bush bodies 4 are fully inserted, it is necessary to rotate, in either direction, the manoeuvring bush 7 to extend or shorten the bridge element and to mutually push outwards or pull inwards, respectively, the two bush bodies. In this way the entire attachment assembly is securely fastened to the rim bolts and the remaining part of the anti-skid system can be joined thereto, with methods which are not relevant to the purposes of the present invention and which can for example be the ones illustrated in PCT/IB03/02898.

Fig. 2 shows a second embodiment of the bridge element according to the invention.

A first portion of the bridge element consists of an internally-threaded stem 10 which is hinged at 12 to the head of either one of the two bush bodies 4, for example the one of bolt 3. Outside stem 10 a sleeve 11 is slidingly mounted, kept pushed away from hinge 12 by a spring 13. The joining point of the anti-skid system is in the form of a U-shaped slot 14 welded to the sleeve 11.

A second portion of the bridge element, hinged at 15 to the other bush body 4, consists of an extendable threaded stem 16 divided into two parts by articulated knee joint means, such as a hinge 17: a front part 18, equipped with a threading intended to engage with the internally-threaded stem 10, and a rear, elastically-extendable part 19.

This second extendable part 19, according to a shown preferred embodiment, consists of a head sliding on a base portion, between which a thrust spring 19a is arranged.

In the "open V" position shown in fig. 2, the structure of the bridge element is substantially labile, so that arranging the two bush bodies 4 at the desired distance in order to be able to fit them on the rim bolts is relatively easy. By pushing in the direction of the arrow P, overcoming the elastic thrust of spring 19a, the element 19 is forced to shorten until alignment thereof with stem 10 is achieved (arrangement shown at the top of fig. 2). Once alignment is obtained, the slidable sleeve 11, pushed by spring 13, moves leftwards (in fig. 2) until it ends abutting with a ring 19b integral with the elastic element 19. In this operation position the sleeve 11 also overlaps the knee joint hinge 17, consequently preventing any opening rotation thereof.

In this locked rectilinear condition, spring 19a of elastic element 19 imparts a thrust which tends to extend the bridge element, obtaining the desired result on the two bush bodies 4.

In order to be able to suitably calibrate the thrust which may be imparted by spring 19a, according to the specific distance between the centres of the pair of bolts 2 and 3, it is possible to mutually rotate stem 10 and elastic element 19 (when the assembly is not fastened to bolts 2 and 3), so as to insert or remove by the desired measure the threaded portion 18 into or from the threaded stem 10 and hence to adapt the compression travel of spring 19a to the desired value.

In order to remove the attachment assembly from bolts 2 and 3 it is sufficient to pull back (i.e. rightwards in fig. 2) the sleeve 11, overcoming the thrust of spring 13, until the knee-joint 17 is exposed: in this condition it is sufficient to gently pull towards oneself the assembly to snap it back into its V-shaped stand-by position, which allows easy disengagement thereof from bolts 2 and 3.

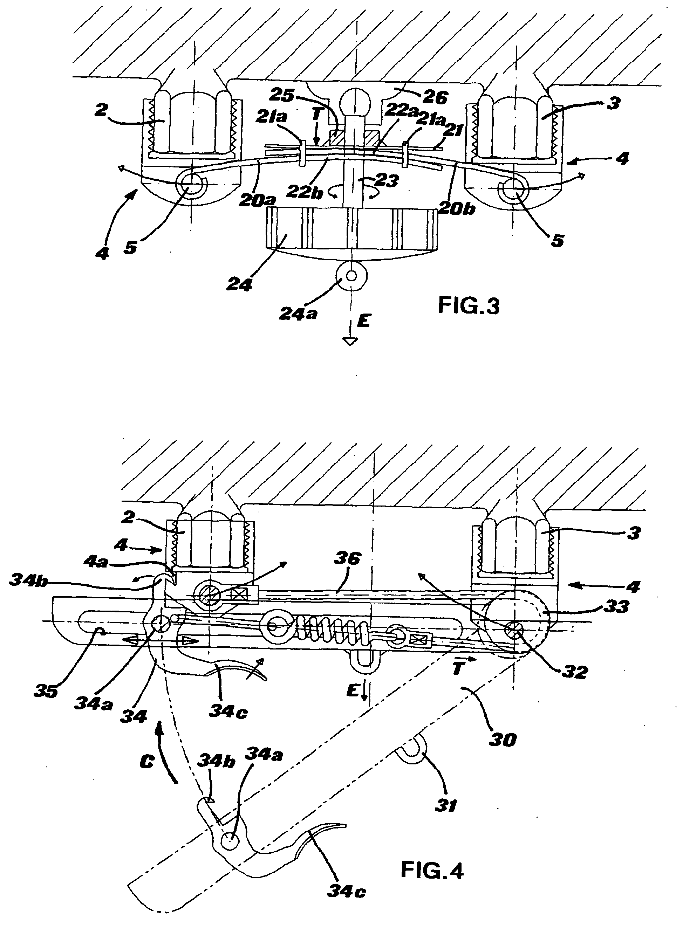

Fig. 3 shows a third embodiment of the invention. In this case, the bridge element consists of two opposite leaf-spring elements 20a and 20b which are attached to respective hinges 5 on the bush bodies 4.

The two leaf-spring elements 20a and 20b partially overlap and are connected by a third leaf-spring element 21, by respective holding clamps 21a, intended to remain in a symmetrical position with respect to the two leaf springs 20a and 20b.

The two leaf-spring elements 20a and 20b further have, in a central position with respect to the two hinges 5, slots 22a and 22b, respectively, wherein a threaded stem 23 of a manoeuvring knob 24 is intended to be inserted. In a loose condition, i.e. when the device is inoperative, the two leaf springs 20a and 20b can mutually slide, with the threaded stem 23 inserted in the two slots, so as to be able to adjust the distance between the centres of hinges 5 to the desired measure. In order to prevent them from being free to mutually slide also during the operative condition, thereby preventing the setting in of an elastic compression between the two hinges 5, mutual engagement means (not shown) are further provided which make them substantially mutually integral when they are compressed: for example, the two coupled surfaces of the two leaf springs 20a and 20b are equipped with a series of knurlings or detents, crosswise to the direction of sliding, which can mutually engage.

The threaded stem 23 is screwed in a threaded bore of an engagement block 25 integral with the third leaf-spring element 21. It is further equipped, at the end opposite to knob 24, with a foot member 26, which is intended to abut against the rim surface.

The manoeuvring knob 24 further has a ring 24a for securing the spoke system of the anti-skid device.

During functioning, the user causes the two leaf spring elements 20a and 20b to mutually slide, until the two bush bodies 4 are arranged according to the desired distance between centres. The relative sliding movement between these two elements is made possible, in a loose condition, by slots 22a and 22b.

After having applied bush bodies 4 to the respective bolts 2 and 3, the user causes the manoeuvring knob 24 to rotate, which draws foot 26 towards the rim. Once foot 26 is resting on the rim, the further rotation of knob 24 pushes block 25 and the third leaf-spring element 21 in the direction of arrow T, bringing the latter against the pair of leaf springs 20a and 20b which mutually engage by the aforementioned means of mutual engagement. In these conditions the further rotation of knob 24 produces a compression of the leaf spring which therefore causes, on hinges 5 and on the respective bush bodies 4, the desired crosswise push.

Fig. 4 shows a fourth embodiment of the invention. In this case, one of the bush bodies 4, for example the one coupled with bolt 3, is equipped with a rod 30, rotatable about a pivot or pin 32, whereto the junction point 31 of the anti-skid system is joined. The rod 30 is shown in its working position by a solid line and in its stand-by position by a hyphen-dotted line.

On rod 30 a transmission pulley 33 is further mounted. Pulley 33 is preferably mounted eccentrically with respect to hinge 32, that is so that, upon rotation of rod 30 in the direction of arrow C of fig. 4, it moves at least partly away from the opposite bush body mounted on bolt 2.

The rod 30 is equipped with a trigger-shaped holding member 34, rotatable about a pivot 34a and slidable longitudinally to rod 30 in a respective slot 35. This holding member is equipped with a hook end 34b and with an opposite actuating lever 34c.

The second bush body 4 correspondingly has a recess 4a wherein the hook end 34b of holding member 34 is intended to engage. To the second bush body 4 the end of an elastic element 36 is further fixed, which passes around pulley 33 and is fixed, through the other end, to the holding member 34, between pivot 34a and hook 34b.

Elastic element 36 can be an elastic string, or an inextensible rope, for example a steel cablet, wherein a helicoidal spring is inserted.

To assemble this fourth embodiment, the user has to initially fit the two bush bodies 4 on the respective pair of opposite bolts 2 and 3. Then, lowering rod 30 in the direction of arrow C, he or she longitudinally moves the holding trigger 34 along slot 35, overcoming the elastic bias of string 36, until hook 34b is engaged in recess 4a. The traction imparted by the elastic element 36, directed in the direction of arrow T, on one hand keeps engaged the detent of the hook 34b within recess 4a and, on the other hand, imparts a crosswise traction between the two bush bodies 4, achieving the desired fastening result.

Although the holding member 34 can be mounted on slot 35 completely free to translate, a variant of this embodiment provides for pivot 34a to be threaded and equipped with a clamping pawl (not shown), by which it can be provisionally held in the desired position on rod 30. This variant allows to ease mounting, once the approximate position of the trigger on the rod has been identified (based on the distance from the centres of the bolts employed on the specific rim), because it is not necessary to tension element 36 while rod 30 is being rotated in the direction of arrow C. In this last case, once the rod has been lowered onto the holding bush body, it is sufficient to loosen up the clamping pawl to allow holding member 34 to move back, under the traction of the elastic string 36, to cause the hook end 34b to fully enter the seat or recess 4a and produce the desired crosswise traction between the two bush bodies.

By the attachment assembly according to the invention the object set forth in the preamble is perfectly achieved.

As a matter of fact, by means of two simple opposite bush bodies and an adaptable bridge element arranged therebetween, it is possible to have available, at the same time, an attachment element for the anti-skid system and an effective system for fastening it to wheel rim.

The substantial symmetry of the elements making up said system also renders balanced the attachment assembly according to the invention.

Moreover, since centring the attachment assembly occurs automatically by arranging the two bush bodies on two opposite bolts, also the mounting becomes more intuitive and error-free.

It is intended, however, that the invention is not limited to the specific embodiments illustrated above, which represent only non-limiting examples of the scope of the invention, but that a number of variants are possible, all within the reach of an expert in the field, without departing from the scope of the invention.

In particular, the teaching offered herein extends to a more complex version of the device, wherein the constraint points may also be more than two. In other words, by using the bridge structures that can be extended/shortened set forth above, it is possible to construct a triangular or square arrangement, for example, which is applicable to 3 or 4 rim bolts, respectively.

A variant of such an arrangement may provide for the bridge elements not be always arranged between two rim bolts, but for example between each bolt and a common convergence point, so as to define a substantially radial structure.

## Claims

1. An attachment device for a spoke anti-skid system for vehicle wheels, of the type comprising at least a bush body (4) engageable with a bolt (2, 3) of the wheel rim, said attachment device comprising at least two of said bush bodies engageable on corresponding rim bolts, **characterised in that** between said bush bodies there is provided a bridge element which may be extended or shortened so as to impart a traction or a thrust between such bush bodies.

2. The device as in claim 1, wherein said bridge element consists of two threaded stems (6) hinged to two respective opposite bush bodies (4) and engaged in a shared threaded manoeuvring bush (7), the rotation of which is apt to cause said threaded stems to mutually draw closer together or further apart.

3. The device as in claim 1, wherein said bridge element has a stand-by position and a working position, elastic means (13, 19a, 36, 20a, 20b, 21) being further provided which are apt to impart said traction or thrust upon changing from the stand-by to the working position.

4. The device as in claim 3, wherein said bridge element consists of two half-portions (10, 16) hinged to the respective bush bodies and mutually connected by articulated knee joint means (17), at least one (16) of the two half-portions being apt to be shortened against the elastic force imparted by said elastic means (19a), the relative attitude of the two half-portions in working position being guaranteed by slidable blocking means apt to stop opening rotation of the articulated knee-joint means (17).

5. The device as in claim 4, wherein said blocking means are in the form of a sleeve (11) slidable above a knee-joint hinge (17) in the condition in which the two half-portions are mutually aligned.

6. The device as in claim 5, wherein said sleeve (11) is kept pushed in said position above the knee-joint hinge (17) by further elastic means (13).

7. The device as in claim 1, wherein said bridge element consists of a rod (30) hinged (32) to a first bush body, the rod (30) supporting an elastic element (36) which is kept taut, through a trigger holding member (34), between said first bush body and a second bush body (4).

8. The device as in claim 1, wherein said bridge element is in the form of a pair of leaf-spring elements (20a, 20b) mutually sliding and hinged to two respective bush bodies (4), a third leaf-spring element (21) being further provided, which is coupled with the first two, wherewith manoeuvring means (23, 24, 25, 26) engage, apt to push it away from the wheel rim to compress the pair of leaf-spring elements (20a, 20b) constrained between the respective bush bodies (4).

9. The device as in claim 8, wherein said manoeuvring means comprise a threaded stem (23) slidingly engaged in a threaded bore of a block (25) integral with said third leaf-spring element (21), an end of the stem having a resting foot (26) on the rim and the other end having a manoeuvring knob (24).

10. The device as in any one of the previous claims, wherein said bush bodies (4) are two and applicable to two bolts opposite to each other with respect to the wheel axis of rotation.

11. The device as in any one of claims 1 to 10, wherein said bush bodies (4) are more than two.

12. The device as in claim 11, wherein at least two bridge elements are provided between the bush bodies (4), which bridge elements are mutually converting in a common point.

13. An anti-skid system for vehicle wheels comprising an attachment device as in any one of the previous claims.

## Patentansprüche

1. Befestigungsvorrichtung für ein Speichen-Antiblockiersystem für Fahrzeugräder der Art, die mindestens einen Buchsenkörper (4) umfasst, der mit einem Bolzen (2, 3) der Radfelge in Eingriff bringbar ist, wobei die Befestigungsvorrichtung mindestens zwei der Buchsenkörper, die mit entsprechenden Felgenbolzen in Eingriff bringbar sind, umfasst, **dadurch gekennzeichnet, dass** zwischen den Buchsenkörper ein Brückenelement vorgesehen ist, das verlängert oder verkürzt werden kann, um eine Zugkraft oder eine Druckkraft zwischen den Buchsenkörper auszuüben.

2. Vorrichtung nach Anspruch 1, **dadurch gekennzeichnet, dass** das Brückenelement aus zwei mit Gewinde versehenen Stangen (6) besteht, die an zwei jeweiligen gegenüberliegenden Buchsenkörpern (4) angelenkt sind und in einer gemeinsamen mit Gewinde versehenen Manövrierbuchse (7) in Eingriff genommen werden, deren Drehung bewirken kann, dass die mit Gewinde versehenen Stangen sich einander annähern oder sich voneinander entfernen.

3. Vorrichtung nach Anspruch 1, **dadurch gekennzeichnet, dass** das Brückenelement eine Stand-by-Position und eine Arbeitsposition aufweist, wobei ferner elastische Mittel (13, 19a, 36, 20a, 20b, 21) vorgesehen sind, die beim Wechsel von der Staztd-by- in die Arbeitsposition die Zugkraft oder die Druckkraft ausüben können.

4. Vorrichtung nach Anspruch 3, **dadurch gekennzeichnet, dass** das Brückenelement aus zwei Hälften (10, 16) besteht, die an den jeweiligen Buchsenkörpern angelenkt sind und durch gelenkige Kniegelenkmittel (17) miteinander verbunden sind, wobei mindestens eine (16) der zwei Hälften gegen die durch die elastischen Mittel (19a) ausgeübte elastische Kraft verkürzt werden kann, wobei die relative Lage der zwei Hälften in der Arbeitsposition durch verschiebbare Blockiermittel gewährleistet wird, welche die Öffuungsrotation der gelenkigen Kniegelenkmittel (17) stoppen können.

5. Vorrichtung nach Anspruch 4, **dadurch gekennzeichnet, dass** die Blockiermittel die Form einer Hülse (11) aufweisen, die in dem Zustand, in dem die zwei Hälften miteinander ausgerichtet sind, über ein Kniegelenk (17) schiebbar ist.

6. Vorrichtung nach Anspruch 5, **dadurch gekennzeichnet, dass** die Hülse (11) durch weitere elastische Mittel (13) in die Position über dem Kniegelenk (17) geschoben gehalten wird.

7. Vorrichtung nach Anspruch 1, **dadurch gekennzeichnet, dass** das Brückenelement aus einem Stab (30) besteht, der an einem ersten Buchsenkörper angelenkt ist (32), wobei der Stab (30) ein elastisches Element (36) hält, das durch ein Auslöse-Halteelement (34) zwischen dem ersten Buchsenkörper und einem zweiten Buchsenkörper (4) straff gespannt gehalten wird.

8. Vorrichtung nach Anspruch 1, **dadurch gekennzeichnet, dass** das Brückenelement die Form eines Paars von Blattfederelementen (20a, 20b) aufweist, die sich einander gegenüber verschieben und an zwei jeweiligen Buchsenkörper (4) angelenkt sind, wobei ferner ein mit den ersten beiden gekoppeltes drittes Blattfederelement (21) vorgesehen ist, das sich mit Manövriermitteln (23, 24, 25, 26) in Eingriff befindet, die es von der Radfelge weg schieben können, um das Paar von Blattfederelementen (20a, 20b), die zwischen die jeweiligen Buchsenkörper (4) gezwungen sind, zusammenzudrücken.

9. Vorrichtung nach Anspruch 8, **dadurch gekennzeichnet, dass** die Manövriermittel eine mit Gewinde versehene Stange (23) umfassen, die verschiebbar in einer mit Gewinde versehenen Bohrung eines Blocks (25) in Eingriff genommen wird, der einstückig mit dem dritten Blattfederelement (21) ausgebildet ist, wobei ein Ende der Stange einen Stützfuß (26) auf der Felge und das andere Ende einen Manövrierknauf (24) aufweist.

10. Vorrichtung nach einem der vorangehenden Ansprüche, **dadurch gekennzeichnet, dass** die Buchsenkörper (4) zwei sind und für zwei Bolzen, die bezogen auf die Drehachse des Rades einander gegenüber liegen, anwendbar sind.

11. Vorrichtung nach einem der Ansprüche 1 bis 10, **dadurch gekennzeichnet, dass** die Buchsenkörper (4) mehr als zwei sind.

12. Vorrichtung nach Anspruch 11, **dadurch gekennzeichnet, dass** zwischen den Buchsenkörpern (4) mindestens zwei Brückenelemente vorgesehen sind, wobei sich die Brückenelemente an einem gemeinsamen Punkt miteinander vereinigen.

13. Antiblockiersystem für Fahrzeugräder, das eine Befestigungsvorrichtung nach einem der vorangehenden Ansprüche umfasst.

## Revendications

1. Dispositif de fixation pour un système anti-patinage à rayons pour des roues de véhicule, du type comportant au moins un corps de douille (4) pouvant être engagé avec un goujon (2, 3) de la jante de roue, ledit dispositif de fixation comportant au moins deux desdits corps de douilles pouvant être engagés sur des goujons de jante correspondants, **caractérisé en ce qu'**il est prévu, entre lesdits corps de douilles, un élément formant pont qui peut être allongé ou raccourci afin d'appliquer une traction ou une poussée entre ces corps de douilles.

2. Dispositif selon la revendication 1, dans lequel ledit élément formant pont est constitué de deux tiges filetées (6) articulées sur deux corps de douilles opposés respectifs (4) et engagées dans une douille filetée et commune (7) de manoeuvre dont la rotation est apte à tirer l'une vers l'autre ou écarter l'une de l'autre lesdites tiges filetées.

3. Dispositif selon la revendication 1, dans lequel ledit élément formant pont a une position d'attente et une position de travail, les moyens élastiques (13, 19a, 36, 20a, 20b, 21) étant en outre prévus, lesquels sont aptes à communiquer ladite traction ou ladite poussée à la suite d'un passage de la position d'attente la position de travail.

4. Dispositif selon la revendication 3, dans lequel ledit élément formant pont est constitué de deux moitiés (10, 16) articulées sur les corps de douilles respectifs et reliées mutuellement par des moyens à joint à genouillère articulés (17), au moins l'une (16) des moitiés étant apte à être raccourcie contre la force élastique communiquée par lesdits moyens élastiques (19a), l'assiette relative des deux moitiés dans la position de travail étant garantie par des moyens de blocage coulissants aptes à arrêter la rotation d'ouverture du moyen à joint à genouillère articulés (17).

5. Dispositif selon la revendication 4, dans lequel lesdits moyens de blocage se présentent sous la forme d'un manchon (11) pouvant coulisser au-dessus d'une charnière (17) de joint à genouillère dans la condition dans laquelle les deux moitiés sont mutuellement alignées.

6. Dispositif selon la revendication 5, dans lequel ledit manchon (11) est maintenu poussé dans ladite position au-dessus de l'articulation (17) de joint à genouillère par d'autres moyens élastiques (13).

7. Dispositif selon la revendication 1, dans lequel ledit élément formant pont est constitué d'une tige (30) articulée (32) sur un premier corps de douille, la tige (30) supportant un élément élastique (36) qui est maintenu tendu, par l'intermédiaire d'un élément (34) de maintien à détente, entre ledit premier corps de douille et un second corps de douille (4).

8. Dispositif selon la revendication 1, dans lequel ledit élément formant pont se présente sous la formé d'une paire d'éléments à ressorts plats (20a, 20b) glissant mutuellement et articulés sur deux corps de douilles respectifs (4), un troisième élément à ressort plat (21) étant en outre prévu, lequel est relié aux deux premiers, avec lesquels des moyens de manoeuvre (23, 24, 25, 26) entrent en prise, aptes à le pousser à l'écart de la jante de la roue pour comprimer les deux éléments à ressorts plats (20a, 20b) contraints entre les corps de douilles respectifs (4).

9. Dispositif selon la revendication 8, dans lequel lesdits moyens de manoeuvre comprennent une tige filetée (23) engagée de façon coulissante dans un trou taraudé d'un bloc (25) réalisé d'une seule pièce avec ledit troisième élément à ressort plat (21), une extrémité de la tige ayant un pied (26) d'appui sur la jante et l'autre extrémité ayant un bouton de manoeuvre (24).

10. Dispositif selon l'une quelconque des revendications précédentes, dans lequel lesdits corps de douilles (4) sont au nombre de deux et peuvent être appliqués sur deux goujons opposés l'un à l'autre par rapport à l'axe de rotation de la roue.

11. Dispositif selon l'une quelconque des revendications 1 à 10, dans lequel lesdits corps de douilles (4) sont plus de deux.

12. Dispositif selon la revendication 11, dans lequel au moins deux éléments formant pont sont prévus entre les corps de douilles (4), lesquels éléments formant pont convergent mutuellement en un point commun.

13. Système anti-patinage pour des roues de véhicule comportant un dispositif de fixation selon l'une quelconque des revendications précédentes.
